# EUROPÄISCHE PATENTSCHRIFT

(11) **EP 2 469 115 B1**
(45) Veröffentlichungstag und Bekanntmachung des Hinweises auf die Patenterteilung: **26.11.2014**
(21) Anmeldenummer: 11010122.7
(22) Anmeldetag: 22.12.2011
(51) Int. Cl.: F16D 27/112

(54) **Reibschaltkupplung**
Friction coupling
Embrayage à friction

(30) Priorität: 22.12.2010 DE 102010055497
(43) Veröffentlichungstag der Anmeldung: 27.06.2012
(73) Patentinhaber: LICOS Trucktec GmbH, 88677 Markdorf (DE)
(72) Erfinder: Jürgensmeyer, Jan, 88048 Friedrichshafen (DE)
(74) Vertreter: Dobler, Markus

(56) Entgegenhaltungen:
- EP-A1- 1 288 518
- DE-A1-102004 057 848
- JP-A- H10 267 052

## Beschreibung

### Stand der Technik

Zur Übertragung von Drehmomenten zwischen einem Rotor und einem mit dem Rotor anzutreibenden Element sind schaltbare Reibkupplungen bekannt, mit welchen miteinander zu kuppelnde Teile wie beispielsweise scheibenartige Kupplungskomponenten wahlweise getrennt oder reib- bzw. kraftschlüssig verbunden werden können.

Derartige Reibschaltkupplungen z. B. mit einer Reibscheibenkupplung können als Magnetkupplungen ausgebildet sein, die eine Elektromagnetanordnung mit einem bestrombaren Spulenkörper z. B. eine Drahtwicklung und einem Spulenträger aus magnetisch leitfähigem Material umfassen.

Dazu zählen auch solche Anordnungen, welche zusätzlich Permanentmagnete aufweisen, durch deren Magnetwirkung, bei nicht bestromtem bzw. nicht magnetisch wirkendem Elektromagneten, ein versetzbares Kupplungs- bzw. Ankerelement gegen die Wirkung z. B. eine Federkraft an einen Gegenabschnitt angezogen wird und diese kraftschlüssig für eine Drehmomentübertragung verbunden sind. Durch Bestromung des Elektromagneten kann dann mit dem durch die Spule erzeugten Magnetfeld die Wirkung der Dauermagneten so abgeschwächt bzw. aufgehoben werden, dass unter Wirkung der Federkraft die Reibkupplung außer Eingriff gerät, wobei das bewegbare Ankerelement die Kraftschlussposition verlässt. Derartige sogenannte Fail-Safe-Kupplungen sind demnach in einem stromlosen Zustand der Elektromagnetanordnung durch die Magnetwirkung von Dauermagnetmitteln in einem geschalteten Zustand. Die Permanentmagnetmittel sind in der Regel scheibenförmig beispielsweise zwischen zwei Schalen des Spulenkörpers angeordnet. Die Magnetisierungsrichtung der Permanentmagnetmittel ist axial bezogen auf eine Achse S, um welche der Rotor dreht.

Derartige Reibschaltkupplungen sind on den EP 1 288 518 oder DEIC 2004 057 848 bekannt.

Die diskutierten bekannten Reibschaltkupplungen können bisher aufgrund ihrer Außenabmessungen, insbesondere in radialer Richtung zur Rotordrehachse, nicht für alle gewünschten Anwendungsmöglichkeiten bzw. nur bei ausreichend vorhandenem radialen Bauraum Verwendung finden.

### Aufgabe und Vorteile der Erfindung

Aufgabe der vorliegenden Erfindung ist es, Reibschaltkupplungen der einleitend genannten Art zu verbessern insbesondere in einer kompakten Bauform bzw. im Hinblick auf eine wirtschaftliche Fertigung bereitzustellen.

Diese Aufgabe wird durch den Anspruch 1 gelöst.

Die abhängigen Ansprüche betreffen vorteilhafte Varianten der Erfindung.

Die Erfindung geht aus von einer Reibeschaltkupplung für eine Drehmomentübertrag von einem um eine Achse S antreibbaren Rotor auf ein anzutreibendes Element, umfassend eine Reibscheibenkupplung mit einer Elektromagnetanordnung, die einen Spulenkörper und einen den Spulenkörper tragenden und diesen zumindest teilweise umgebenden ferromagnetisch leitenden Spulenträger aufweist, welcher einen zur Achse S parallel ausgerichteten und in Bezug auf den Spulenkörper radial außenliegenden Stegabschnitt und einen innenliegenden Stegabschnitt besitzt, und zwischen dem innen- und außenliegenden Stegabschnitt des Spulenträgers Permanentmagnetmittel vorhanden sind, über welche ein axial bewegbarer Reibabschnitt der Reibschaltkupplung magnetisch mit dem Rotor verbindbar ist, wobei im elektrisch geschalteten Zustand der Elektromagnetanordnung durch Schwächung der magnetischen Anziehwirkung der Permanentmagnetmittel die Anlage des Reibabschnitts am Rotor aufhebbar ist. Der Reibabschnitt ist insbesondere direkt oder indirekt mit dem anzutreibenden Element verbunden. Bevorzugt ist das anzutreibende Element ebenfalls um die Achse S drehbar.

Der Kern der Erfindung liegt darin, dass die den Spulenkörper (9) und den Spulenträger (13) mit dem radial außenliegenden Stegabschnitt (13b) und dem innenliegenden Stegabschnitt (13a) umfassende Elektromagnetanordnung (4) positionsfest gehalten ist, wobei der radial außen liegende Stegabschnitt ausschließlich als Rohrelement ausgebildet ist. Insbesondere ist es vorteilhaft, dass der radial außenliegende Stegabschnitt im Wesentlichen keine radialen Fortsätze aufweist beispielsweise selbst keine steg-oder rippenartige Erhebungen besitzt, die über ihre Länge umfänglich oder axial am radial außenliegenden Stegabschnitt vorgesehen sind. Diese Fortsätze oder Erhebungen fehlen insbesondere sowohl auf einer radialen Außen- und Innenseite des radial außenliegenden Stegabschnitte.

Was die Herstellung und den Platzbedarf angeht, ist der radial außenliegende Stegabschnitt vorteilhafterweise als ein einfaches bzw. glattes Rohr bzw. Hohlteil ausgestaltet. Damit lassen sich insbesondere bei begrenzten Platz- bzw. Einbauverhältnissen in radialer Richtung zur Achse S entsprechende Reibschaltkupplungen bzw. Elektromagnetanordnung vorteilhaft realisieren. Der Stegabschnitt trägt somit lediglich mit seiner Wandstärke zur radialen Abmessung der gesamten Anordnung bei.

Der radial außenliegende Stegabschnitt ist insbesondere über die zumindest nahezu gesamte axiale Länge des Spulenkörpers benachbart zu diesem vorhanden z. B. in der Arte einer Außenummantelung. Besonders vorteilhaft steht der radial außenliegende Stegabschnitt in axialer Richtung zur Achse S etwas über den Spulenkörper über, wobei in diesem überstehenden Bereich die Permanentmagnetmittel am äußeren Stegabschnitt vorhanden sein können, bevorzugt radial innenseitig. Eine radial außenseitige Anordnung der Permanentmagnetmittel an dem radial außenliegende Stegabschnitt ist ebenfalls möglich, wobei dies an beliebigen Stellen über die gesamte axiale Erstreckung des radial außenliegenden Stegabschnitts möglich ist. Die axiale Erstreckung der Permanentmagnetmittel ist in der Regel geringer als die axiale Erstreckung des außenliegenden Stegabschnitts.

In der Regel ist der Spulenkörper in einem vom Spulenträger teilweise umgebenen Raum mit einer Vergussmasse vergossen gehalten.

Der radial innenliegende Stegabschnitt erstreckt sich ebenfalls bevorzugt über die zumindest nahezu gesamte axiale Erstreckung des Spulenkörpers. Zur Ausbildung eines gemeinsamen Magnetisierungskörpers sind die beiden Stegabschnitte in der Regel über einen körperlichen Verbindungsabschnitt miteinander verbunden, zum Beispiel einen radial nach außen umgebogen vorhandenen Abschnitt des radial innenliegenden Stegabschnitts. Die Verbindung kann im Bereich der Permanentmagnetmittel erfolgen, insbesondere indem die Permanentmagnetmittel zwischen den beiden Stegabschnitten positioniert fixiert sind. Bevorzugt sind die Permanentmagnetmittel auf deren gegenüberliegenden Hauptseiten vollständig überdeckt bzw. sandwichartig eingebettet von gegenüberliegenden Abschnitten der beiden Stegabschnitte.

Vorteilhafterweise sind die Permanentmagnetmittel ringscheibenförmig mit gegenüberliegenden flächigen Hauptseiten und dazwischen vorhandenen Schmalseiten. Die Magnetfeldlinien der Permanentmagnetmittel verlaufen in Magnetisierungsrichtung bzw. senkrecht zu den Hauptseiten. Die Permanentmagnetmittel können zum Beispiel mehrere segmentartige Dauermagnete oder einen durchgängigen Ring aus einem Permanentmagnetmaterial umfassen.

Die Permanentmagnetmittel sind bevorzugt einstückig bzw. ringartig um die Achse S bzw. durchgängig oder z. B. unterbrochen ausgebildet.

Der innenliegende Stegabschnitt ist insbesondere so ausgestaltet, dass dieser eine optimale Anbindung bzw. Verbindung mit dem außenliegenden Stegabschnitt bzw. dem Rohrelement ermöglicht. Dabei ermöglicht die Gesamtanordnung einen Ringschluss der Magnetfeldlinien der Permanentmagnetmittel in den zu magnetisierenden Bauteilabschnitten.

Grundsätzlich ist es vorteilhaft, wenn eine Magnetisierungsrichtung der Permanentmagnetmittel, welche senkrecht zu gegenüberliegenden flächigen Hauptseiten der Permanentmagnetmittel verläuft, senkrecht zur Achse S steht. Grundsätzlich ist jedoch auch ein um 90 Winkelgrade versetzte Ausrichtung der Permanentmagnetmittel nicht ausgeschlossen, also parallel zur Achse S.

Damit stehen konstruktiv eine Vielzahl von Möglichkeiten zur Verfügung, eine sehr platzsparende Konstruktion der Reibschaltkupplung bzw. der Elektromagnetanordnung samt Permanentmagnetmittel zu realisieren, wobei in allen Varianten vorteilhafterweise das einfache und kompakte Rohrelement als außenliegender Stegabschnitt dient.

Weiter wird vorgeschlagen, dass das Rohrelement eine gleichmäßige Wandstärke besitzt. Somit lässt sich der radial außenliegende Stegabschnitt einfach herstellen bzw. aus handelsüblich zur Verfügung stehenden Materialien erstellen. Das Rohrelement weist bevorzugt einen gleichbleibenden Innen- und Außendurchmesser auf bzw. ist als Rohrhülse gestaltet.

Das Rohrelement bzw. der Rohrabschnitt kann aber auch eine veränderliche Wandstärke aufweisen, insbesondere um Gewicht einzusparen. Es ist in diesem Zusammenhang beispielsweise ein im Schnitt trapezförmiges Rohrelement denkbar.

Es ist überdies vorteilhaft, dass das Rohrelement die

Permanentmagnetmittel vollständig umfänglich an einer Mantelfläche abdeckt. So können sich die Magnetfeldlinien vorteilhaft ausbilden, insbesondere was den Übergang zwischen den Permanentmagnetmitteln und dem Rohrelement angeht. Außerdem lassen sich die Permanentmagnetmittel damit stabil und dauerhaft beispielsweise über eine flächige Hauptseite der Permanentmagnetmittel an dem Rohrelement fest anbringen. Die gegenüberliegende Hauptseite der Permanentmagnetmittel kann beispielsweise mit einem benachbarten Abschnitt des radial innenliegenden Stegabschnitts des Spulenträgers in Verbindungskontakt sein. Es ist aber nicht ausgeschlossen, dass die gegenüberliegende Hauptseite der Permanentmagnetmittel frei bleibt, insbesondere über einen Luftspalt beabstandet gegenüberliegend zu einem Abschnitt des Rotors oder des radial innenliegenden Stegabschnitts.

Bevorzugt sind die Permanentmagnetmittel ebenfalls rohrförmig ausgestaltet. Damit lassen sich die Permanentmagnetmittel einfach herstellen und platzsparend am außenliegenden Stegabschnitt anordnen und mit dem Rohrelement verbinden. Außerdem sind rohrförmige Permanentmagnetmittel bezüglich der rotationssymmetrischen Anordnung in der Reibschaltkupplung vorteilhaft. Insbesondere lassen sich entsprechende Abschnitte, die zur Ausbildung der Magnetfeldlinien dienen, also insbesondere der Rotor und der innenliegende Stegabschnitt ebenfalls mit passenden entsprechenden rohrförmigen Abschnitten ausbilden, so dass vorteilhafterweise ein umfänglich geschlossener Bereich der Reibschaltkupplung von den Magnetfeldlinien durchsetzbar ist.

In einer vorteilhaften Modifikation des Erfindungsgegenstandes sind an der Innenseite des Rohrelements in einem Volumen des Rohrabschnitts die Permanentmagnetmittel angeordnet. So ist ebenfalls eine platzsparende Bauweise des Spulenträgers bzw. des radial außenliegenden Stegabschnitts möglich. Die Permanentmagnetmittel können an bzw. auf der Innenseite des Rohrelements aufgesetzt vorhanden sein und/oder gegebenenfalls zumindest teilweise versenkt in einer passenden Vertiefung beispielsweise in einer nutförmigen Materialausnehmung des Rohrelements eingesetzt sein. Die Permanentmagnetmittel können gegebenenfalls bündig oder zumindest teilweise überstehend zu benachbarten Abschnitten an der Innenseite des Rohrelements eingesetzt sein.

Schließlich ist es auch vorteilhaft, dass die Permanentmagnetmittel auf einem Abschnitt des Spulenträgers sitzen, der sich in Bezug auf den Spulenkörper weiter radial nach Innen erstreckt als der spulenkörper. Hier ist insbesondere eine radiale Außenseite des Spulenkörpers gemeint. Dies ist bei einem radial beengten Bauraum vorteilhaft.

Grundsätzlich sind jedoch unterschiedliche bzw. auch andere Anordnungen denkbar. Zum einen können, wie oben erläutert, die Permanentmagnetmittel mit ihrer radialen Außenseite innerhalb bzw. zumindest nahezu bündig mit einer radialen Außenseite des rohrförmigen Spulenkörpers positioniert sein oder zur Außenseite des rohrförmigen Spulenkörpers radial nach innen versetzt. Es ist aber bei ausreichendem radialem Bauraum auch denkbar, dass die Permanentmagnetmittel bzw. die rohrförmigen Permanentmagnetmittel in radial Richtung zur Achse S zumindest teilweise oder vollständig außerhalb der radialen äußeren Erstreckung des Spulenkörpers vorhanden sind.

Prinzipiell kann die Magnetisierungsrichtung der Permanentmagnetmittel senkrecht zur Achse S oder parallel dazu verlaufen.

### Figurenbeschreibung

Weitere Vorteile und Merkmale der Erfindung sind anhand eines schematisch gezeigten Ausführungsbeispiels einer erfindungsgemäßen Anordnung erläutert.

Hierbei zeigt die einzige Figur eine Anordnung mit einer erfindungsgemäßen Reibschaltkupplung.

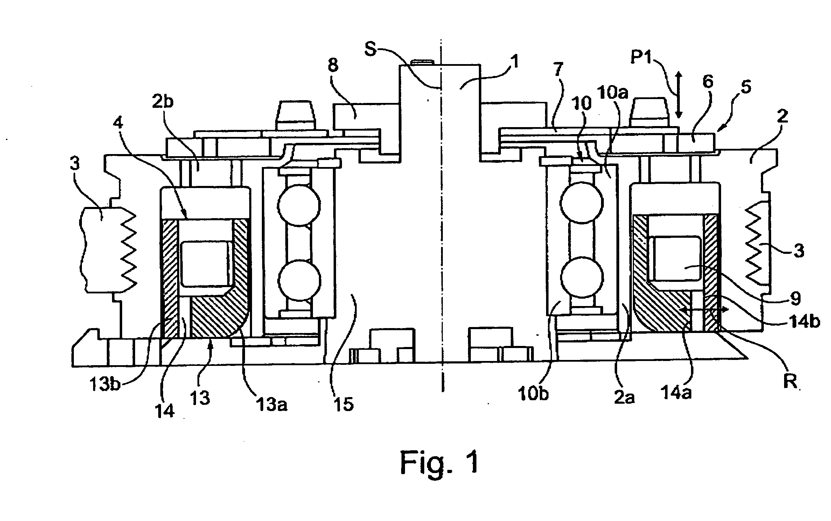

Figur 1 zeigt im Schnitt eine Anordnung, zum Beispiel für ein Fahrzeug mit Brennkraftantrieb mit einer erfindungsgemäßen Reibschaltkupplung, die als so genannte "Fail-Safe-Kupplung" ausgebildet ist. Die Anordnung umfasst eine Welle 1, welche über einen angetriebenen Rotor 2 zumindest zeitweise antreibbar ist. Die Welle 1 dient beispielsweise zum Antrieb eines Zusatzaggregats des Fahrzeugs wie zum Beispiel ein Lüfter oder eine Kühlwasserpumpe. Der Rotor 2 wird über einen umlaufend antreibbaren Antriebsriemen 3 bzw. Mehrfachkeilriemen angetrieben, der sich für eine Drehmomentübertragung mit einer außen am Rotor 2 umfänglich vorhandenen und zum Antriebsriemen 3 passenden Riemenkontaktkontur in Eingriff befindet.

Der Rotor 2 ist über einen radial innenliegenden Abschnitt 2a des Rotors 2 beispielsweise über ein zweireihiges Wälz-Kugellager 10 drehbar gelagert, wobei sich der Abschnitt 2a über nahezu seine gesamte axiale Erstreckung an einem Außenring 10a des Wälz-Kugellagers 10 über die komplette axiale Länge des Außenrings 10a abstützt. Das Wälz-Kugellager 10 selbst ist mit seinem Innenring 10b an einem Lagerabschnitt 15 der Welle 1 aufgenommen, welcher gegenüber anderen Wellenabschnitten einen größeren Durchmesser aufweist.

Außerdem ist eine Elektromagnetanordnung 4 vorgesehen, mit welcher auf eine Reibscheibenkupplung 5 einwirkbar ist. Die Reibscheibenkupplung 5 dient im geschalteten Zustand der Reibschaltkupplung zur Drehmomentübertragung vom Rotor 2 auf die Welle 1 und umfasst eine fest mit der Welle 1 verbundene Reibscheibe bzw. eine ferromagnetische Ankerscheibe 6, welche in Richtung gemäß Doppelpfeil P1 bzw. axial zur Welle 1 bzw. zu deren Drehachse S versetzbar ist. Hierzu ist die Ankerscheibe 6 über eine federnd wirksame Federscheibe 7 zum Beispiel aus Federstahl aufgenommen, wobei die Federscheibe 7 mit einem radial innenliegenden Ring 8 fest verbunden ist und der Ring 8 wiederum über einen abgewinkelten Abschnitt fest mit der Welle 1 verbunden ist.

Die Reibschaltkupplung mit der Ankerscheibe 6 ist derart ausgebildet, dass die Ankerscheibe 6 jeweils eine von zwei unterschiedlichen Betriebsstellungen einnimmt. In einer ersten Betriebsstellung (nicht dargestellt) wird die Ankerscheibe 6 durch von Permanentmagnetmitteln, hier beispielsweise ein Permanentmagnetring 14, erzeugten Magnetkräften an einen stirnseitigen Gegenabschnitt 2b des ferromagnetisch leitenden Rotors 2 herangezogen, so dass die beiden Komponenten 2b und 6 kraft- bzw, reibschlüssig zusammenwirken bzw. drehfest miteinander verbunden sind. Zur Ausbildung eines gewünschten Magnetfeldlinienverlaufs sind die Ankerscheibe 6 und der Gegenabschnitt 2b mit zueinander versetzten Öffnungen versehen.

In der zweiten Betriebsstellung gemäß Figur 1 ist die Ankerscheibe 6 vom Gegenabschnitt 2b über einen geringen Spalt axial beabstandet. Für diese Betriebsstellung ist die Elektromagnetanordnung 4 notwendig, um in einem Schaltzustand bzw. einem bestromten Zustand der Elektromagnetanordnung 4 ein Magnetfeld zu erzeugen, welches das Permanentmagnetfeld der Permanentmagnetmittel zumindest größtenteils kompensiert bzw. diesem entgegenwirkt.

Die positionsfest gehaltene Elektromagnetanordnung 4 umfasst einen bestrombaren bzw. elektrisch versorgbaren Spulenkörper, hier eine Spule 9. Die Spule 9 wird zumindest teilweise von einem Spulenträger umgeben, welcher als aus einem ferromagnetisch leitenden Material bestehenden Magnetkörper 13 ausgebildet ist. Die ringförmig um die Achse S geschlossene Spule 9 ist zur Achse S radial innen- und außenliegend und an einer dazwischen liegenden Seite vom Magnetkörper 13 im Schnitt entlang der Achse S U-förmig umgeben.

Der Magnetkörper 13 ist aus mehreren Teilen hergestellt und umfasst einen radial innenliegenden einfach abgewinkelten Stegabschnitt 13a und einen radial außenliegenden Stegabschnitt 13b, der als Rohrelement mit gleichbleibender Wandstärke ausgestaltet ist.

Der radial innenliegende Stegabschnitt 13a ist innen über einen Luftspalt zum gegenüberliegenden Abschnitt 2a des Rotors 2 beabstandet. Der radial außenliegenden Stegabschnitt 13b ist außen ebenfalls durch einen Luftspalt vom Rotor bzw. einer Innenseite des Teils mit der Riemenkontaktkontur beabstandet.

Zwischen den beiden Stegabschnitten 13a und 13b sind die Permanentmagnetmittel bzw. ist der Permanentmagnetring 14 vorhanden. Dabei ist der Permanentmagnetring 14 mit seinen Hauptseiten mit den Stegabschnitten 13a, 13b verbunden. Eine erste Hauptseite des Permanentmagnetring 14 ist mit einer radial innen liegenden Seite des Stegabschnitts 13b in flächigem Verbindungskontakt und eine zweite Hauptseite des Permanentmagnetring 14 ist mit einer Stirnseite des Stegabschnitts 13a, am in radialer Richtung sich erstreckenden abgewinkelten Teil des Stegabschnitts 13a , in flächigem Verbindungskontakt.

Damit lässt sich in radialer Richtung zur Achse S eine kompakte Bauweise einer erfindungsgemäßen Reibschaltkupplung realisieren.

Die Dicke des ringscheibenförmigen Permanentmagnetrings 14 liegt beispielhaft in der Größenordnung der Wandstärke des Stegabschnitts 13b. Der Permanentmagnetring 14 ist radial magnetisiert bezüglich der Achse S bzw. weist eine entsprechende Magnetisierungsrichtung R auf, die sich senkrecht zu den Flächen der Hauptseiten des Permanentmagnetrings 14 erstreckt.

Die Magnetisierungsrichtung R erstreckt sich quer zu zwei gegenüberliegenden flächigen Hauptseiten 14a, 14b des Permanentmagnetrings 14. Der Permanentmagnetring 14 wird über seine volle mantelflächige radiale Außenseite bzw. Hauptseite 14b überdeckt von einem Abschnitt des rohrhülsenförmigen Stegabschnitts 13b und auf der anderen Hauptseite 14a von einem Abschnitt des Stegabschnitts 13a und ist somit zwischen den Stegabschnitten 13a, 13b eingebettet.

Durch das axiale Anziehen der Ankerscheibe 6 gegen den Gegenabschnitt 2b im Kraftschluss bei Nichtbestromung der Elektromagnetanordnung 4 wird bei rotierend angetriebenem Rotor 2 eine Antriebswirkung auf die Welle 1 übertragen.

Soll bei rotierendem Rotor 2 die Drehmomentübertragung auf die Welle 1 aufgehoben werden, erfolgt die Bestromung der Spule 9 der Elektromagnetanordnung 4, womit ein Magnetfeld erzeugt wird, welches dem Magnetfeld des Permanentmagnetrings 14 entgegenwirkt, so dass ein resultierendes bzw. gegebenenfalls nahezu vollständig aufgehobenes Magnetfeld so gering ist bzw. verschwindet, dass die auf die Ankerscheibe 6 wirkende Federkraft der Federscheibe 7 dafür sorgt, dass die Ankerscheibe 6 von dem Gegenabschnitt 2b wegbewegt wird. Die Welle 1 wird damit nicht drehangetrieben.

### Bezugszeichenliste:

- 1: Welle
- 2: Rotor
- 2a: Abschnitt
- 2b: Gegenabschnitt
- 3: Antriebsriemen
- 4: Elektromagnetanordnung
- 5: Reibscheibenkupplung
- 6: Ankerscheibe
- 7: Federscheibe
- 8: Ring
- 9: Spule
- 10: Wälz-Kugellager
- 10a: Außenring
- 10b: Innenring
- 11: -
- 12: -
- 13: Magnetkörper
- 13a: Stegabschnitt
- 13b: Stegabschnitt
- 14: Permanentmagnetring
- 14a: Hauptseite
- 14b: Hauptseite
- 15: Lagerabschnitt

## Patentansprüche

1. Reibschaltkupplung für eine Drehmomentübertragung von einem um eine Achse S antreibbaren Rotor (2) auf ein anzutreibendes Element, umfassend eine Reibscheibenkupplung (5) mit einer Elektromagnetanordnung (4), die einen Spulenkörper (9) und einen den Spulenkörper (9) tragenden und diesen zumindest teilweise umgebenden ferromagnetisch leitenden Spulenträger (13) aufweist, welcher einen zur Achse S parallel ausgerichteten und in Bezug auf den Spulenkörper (9) radial außenliegenden Stegabschnitt (13b) und einen innenliegenden Stegabschnitt (13a) besitzt, und zwischen dem innen- und außenliegenden Stegabschnitt des Spulenträgers (13) Permanentmagnetmittel (14) vorhanden sind, über welche ein axial bewegbarer Reibabschnitt (6) der Reibschaltkupplung magnetisch mit dem Rotor (2) verbindbar ist, wobei im elektrisch geschalteten Zustand der Elektromagnetanordnung (4) durch Schwächung der magnetischen Anziehwirkung der Permanentmagnetmittel (14) die Anlage des Reibabschnitts (6) am Rotor (2) aufhebbar ist, **dadurch gekennzeichnet, dass** der radial außenliegende Stegabschnitt (13b) ausschließlich als Rohrelement ausgebildet ist.

2. Reibschaltkupplung nach einem der vorherigen Ansprüche, **dadurch gekennzeichnet, dass** das Rohrelement eine gleichmäßige Wandstärke besitzt.

3. Reibschaltkupplung nach einem der vorherigen Ansprüche, **dadurch gekennzeichnet, dass** das Rohrelement die Permanentmagnetmittel (14) vollständig umfänglich an einer Mantelfläche (14b) abdeckt.

4. Reibschaltkupplung nach einem der vorherigen Ansprüche, **dadurch gekennzeichnet, dass** die Permanentmagnetmittel (14) ebenfalls rohrförmig ausgestaltet sind.

5. Reibschaltkupplung nach einem der vorherigen Ansprüche, **dadurch gekennzeichnet, dass** an einer Innenseite des Rohrelements in einem Volumen eines Rohrabschnitts die Permanentmagnetmittel angeordnet sind.

6. Reibschaltkupplung nach einem der vorherigen Ansprüche, **dadurch gekennzeichnet, dass** die Permanentmagnetmittel auf einem Abschnitt des Spulenträgers sitzen, der sich in Bezug auf den Spulenkörper weiter radial nach innen erstreckt als der Spulenkörper.

## Claims

1. Friction clutch for the transmission of torque from a rotor (2) that can be driven about an axis S to an element to be driven, comprising a friction disk clutch (5) with an electromagnet arrangement (4), which comprises a coil body (9) and a ferromagnetic conducting coil support (13) which supports the coil body (9) and at least partly surrounds the latter, which coil support has a web section (13b) aligned parallel to the axis S and lying radially outwards in relation to the coil body (9) and an inner web section (13a), and between the inner and outer web section of the coil support (13) permanent magnets (14) are provided, by means of which an axially movable friction section (6) of the friction clutch can be connected magnetically to the rotor (2), wherein in the electrically connected state of the electromagnetic arrangement (4) by weakening the magnetic forces of attraction of the permanent magnets (14) the application of the friction section (6) on the rotor (2) can be lifted, **characterised in that** the electromagnet arrangement (4) comprising the coil body (9) and the coil support (13) with the radially outer web section (13b) and the inner web section (13a) is held securely in position, wherein the radially outer web section (13b) is configured solely as a tubular element.

2. Friction clutch according to one of the preceding claims, **characterised in that** the tubular element has a uniform wall thickness.

3. Friction clutch according to one of the preceding claims, **characterised in that** the tubular element completely covers the permanent magnets (14) circumferentially on a casing surface (14b).

4. Friction clutch according to one of the preceding claims, **characterised in that** the permanent magnets (14) are also configured to be tubular.

5. Friction clutch according to one of the preceding claims, **characterised in that** the permanent magnets are arranged on an inner side of the tubular element in a part of a tubular section.

6. Friction clutch according to one of the preceding claims, **characterised in that** the permanent magnets are positioned on a section of the coil support which extends further radially inwards in relation to the coil body than the coil body.

## Revendications

1. Embrayage à friction pour transmettre un couple d'un rotor (2) pouvant être entraîné autour d'un axe S à un élément à entraîner, comprenant un embrayage à disque de friction (5) pourvu d'une unité d'électroaimants (4), laquelle comprend un corps de bobine (9) et un support de bobine (13) conducteurs de manière ferromagnétique portant le corps de bobine (9) et entourant ce dernier au moins en partie, lequel support de bobine possède une section d'âme (13b) orientée parallèlement à l'axe S et située radialement à l'extérieur par rapport au corps de bobine (9), et une section d'âme (13a) située à l'intérieur, et des moyens d'aimants permanents (14) étant prévus entre la section d'âme située à l'intérieur et la section d'âme située à l'extérieur du support de bobine (13) et par l'intermédiaire desquels une section de friction (6) axialement mobile de l'embrayage à friction peut être reliée magnétlquement au rotor (2), l'appui de la section de friction (6) sur le rotor (2) pouvant être supprimé, à l'état de commutation électrique de l'unité d'électroaimants (4), par atténuation de l'action d'attraction magnétique des moyens d'aimants permanents (14), **caractérisé en ce que** l'unité d'électroaimants (4) comprenant le corps de bobine (9) et le support de bobine (13) avec la section d'âme située à l'extérieur (13a) et la section d'âme située à l'intérieur (13b) est maintenue de façon fixe, la section d'âme (13b) située radialement à l'extérieur étant réalisée exclusivement sous la forme d'un élément tubulaire.

2. Embrayage à friction selon l'une des revendications précédentes, **caractérisé en ce que** l'élément tubulaire présente une épaisseur de paroi uniforme.

3. Embrayage à friction selon l'une des revendications précédentes, **caractérisé en ce que** l'élément tubulaire recouvre les moyens d'aimants permanents (14) sur toute leur périphérie sur une enveloppe (14b).

4. Embrayage à friction selon l'une des revendications précédentes, **caractérisé en ce que** les moyens d'aimants permanents (14) sont également conçus sous une forme tubulaire.

5. Embrayage à friction selon l'une des revendications précédentes, **caractérisé en ce que** les moyens d'aimants permanents sont disposés sur une face intérieure de l'élément tubulaire dans un volume d'une section du tube.

6. Embrayage à friction selon l'une des revendications précédentes, **caractérisé en ce que** les moyens d'aimants permanents sont placés sur une section du support de bobine s'étendant par rapport au corps de bobine plus vers l'intérieur radialement que le corps de bobine.
